# EUROPEAN PATENT APPLICATION

(11) **EP 4 693 510 A1**
(43) Date of publication of application: **11.02.2026**
(21) Application number: 24780294.5
(22) Date of filing: 26.03.2024
(51) Int. Cl.: H01M 4/62, H01M 4/13, H01M 10/052, H01M 10/0562

(54) **ELECTRODE AND ALL-SOLID-STATE BATTERY**

(30) Priority: 31.03.2023 JP 2023058719
(71) Applicant: TDK Corporation, Tokyo 103-6128 (JP)
(72) Inventor: HORIKAWA, Taisuke, Tokyo 103-6128 (JP); KURIHARA, Masato, Tokyo 103-6128 (JP); SUZUKI, Hisashi, Tokyo 103-6128 (JP); SAKAGEN, Hiroko, Tokyo 103-6128 (JP); YONEDA, Mayumi, Tokyo 103-6128 (JP)
(74) Representative: Epping - Hermann - Fischer
(86) International application number: PCT/JP2024/011923
(87) International publication number: WO 2024/204182

(57) **Abstract**

This electrode contains a compound which contains Li, at least one element selected from among Group 3 to Group 15 elements, and S, wherein a peak intensity Ra of SO₃⁻ and a peak intensity Rb of SO₄⁻ obtained by negative ion analysis through time-of-flight secondary ion mass spectrometry satisfy Ra>Rb.

## Description

### TECHNICAL FIELD

The present invention relates to an electrode and an all-solid-state battery.

Priority is claimed on Japanese Patent Application No. 2023-058719, filed March 31, 2023, the content of which is incorporated herein by reference.

### BACKGROUND ART

In recent years, all-solid-state batteries have been focused on from the perspectives of improving safety and achieving high output. One feature of all-solid-state batteries is the use of a solid electrolyte. Here, properties required for solid electrolytes include ion conductivity, oxidation/reduction resistance, and moldability. One of the challenges compared to conventional organic electrolytic solutions is to improve ion conductivity. Generally, many solid electrolytes exhibit lower conductivity than organic electrolytic solutions.

Patent Document 1 discloses a solid electrolyte represented by the following Composition Formula (1) (provided that 0<z<2 is satisfied, and X is Cl or Br).

Li_{6-3z}Y_{z}X₆··· Formula (1)

Patent Document 2 discloses a solid electrolyte made of a compound represented by the following Formula (2) (provided that A is at least one element selected from the group consisting of Li, Cs and Ca, and X is at least one element selected from the group consisting of F, Cl, Br, and I).

AaEbGcXd··· (2)

### CITATION LIST

### PATENT DOCUMENT

Patent Document 1: PCT International Publication No. WO 2018/025582
Patent Document 2: PCT International Publication No. WO 2021/261558

### SUMMARY OF INVENTION

### TECHNICAL PROBLEM

Such a solid electrolyte is used not only in the solid electrolyte layer, but may also be used in the electrode together with an active material.

It is desirable for the solid electrolyte contained in the electrode to have high ion conductivity, similar to the solid electrolyte used in the solid electrolyte layer.

The present invention has been made in view of the above problems in the prior art, and provides an electrode containing a solid electrolyte having high ion conductivity and an all-solid-state battery.

### SOLUTION TO PROBLEM

In order to address the above problem, the present invention provides the following aspects.

Aspect 1 of the present invention is an electrode containing a compound which contains Li, at least one element selected from among Group 3 to Group 15 elements, and S, wherein a peak intensity Ra of SO₃⁻ and a peak intensity Rb of SO₄⁻ obtained by negative ion analysis through time-of-flight secondary ion mass spectrometry satisfy Ra>Rb.

Aspect 2 of the present invention is the electrode of Aspect 1, wherein a peak intensity ratio R1 (Ra/Rb) of the peak intensity Ra of SO₃⁻ to the peak intensity Rb of SO₄⁻ in the compound satisfies 6.0>R1>1.0.

Aspect 3 of the present invention is the electrode of Aspect 1, wherein a peak intensity ratio R1 (Ra/Rb) of the peak intensity Ra of SO₃⁻ to the peak intensity Rb of SO₄⁻ in the compound satisfies 1.8>R1>1.2.

Aspect 4 of the present invention is the electrode of Aspect 1, wherein a peak intensity ratio R1 (Ra/Rb) of the peak intensity Ra of SO₃⁻ to the peak intensity Rb of SO₄⁻ in the compound satisfies 1.7>R1>1.4.

Aspect 5 of the present invention is the electrode of any one of Aspect 1 to Aspect 4, wherein, in negative ion analysis of the compound through time-of-flight secondary ion mass spectrometry, an SO⁻ peak, an SO₂⁻ peak, an SO₃⁻ peak, and an SO₄⁻ peak are detected, and among the four peaks, the SO₃⁻ peak has a strongest peak intensity.

Aspect 6 of the present invention is the electrode of any one of Aspect 1 to Aspect 5, wherein the compound is represented by the following Formula (1):

LiaEbGcXd··· (1)

(in Formula (1), E is at least one element selected from the group consisting of Al, Sc, Y, Zr, Hf, and lanthanoids, G is at least one group selected from the group consisting of SO₃, SO₄, SO₅, S₂O₃, S₂O₄, S₂O₅, S₂O₆, S₂O₇, and S₂O₈, X is at least one element selected from the group consisting of F, Cl, Br, and I, and 0.5<a<6, 0<b<2, 0.1<c≤6, 0<d≤6.1).

Aspect 7 of the present invention is an all-solid-state battery including a positive electrode and a negative electrode which face each other with a solid electrolyte layer therebetween, wherein at least one of the solid electrolyte layer, the positive electrode, and the negative electrode includes the electrode of any one of Aspect 1 to Aspect 6.

Aspect 8 of the present invention is the all-solid-state battery of Aspect 7, wherein the solid electrolyte layer contains a compound represented by the following Formula (2):

LiaEbGcXd··· (2)

(in Formula (2), E is at least one element selected from the group consisting of Al, Sc, Y, Zr, Hf, and lanthanoids, G is at least one group selected from the group consisting of SO₃, SO₄, SO₅, S₂O₃, S₂O₄, S₂O₅, S₂O₆, S₂O₇, and S₂O₈, X is at least one element selected from the group consisting of F, Cl, Br, and I, and 0.5≤a<6, 0<b<2, 0.1<c≤6, 0<d≤6.1).

### ADVANTAGEOUS EFFECTS OF INVENTION

According to the electrode of the present invention, it is possible to provide an electrode containing a solid electrolyte having high ion conductivity.

### BRIEF DESCRIPTION OF DRAWINGS

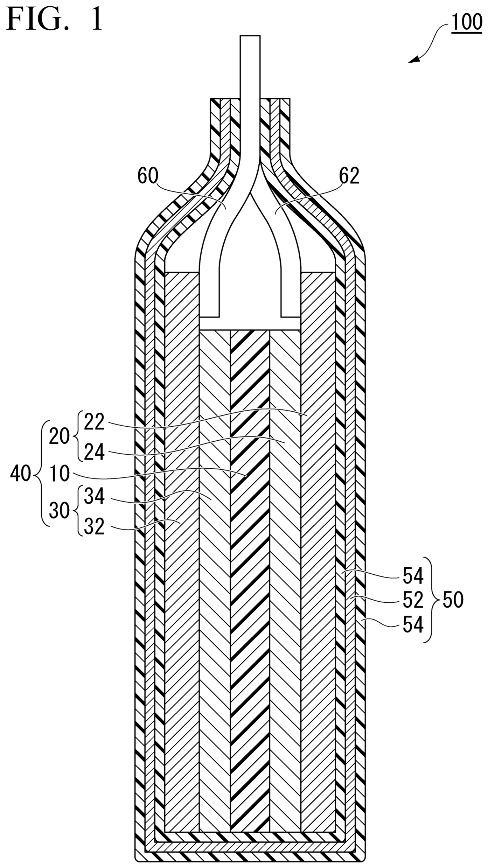

[Figure 1] A cross-sectional schematic view of an all-solid-state battery according to the present embodiment.

### DESCRIPTION OF EMBODIMENTS

Hereinafter, the present embodiment will be appropriately described in detail with reference to the drawings. In the drawings used in the following description, in order to facilitate understanding features of the present invention, feature parts are enlarged for convenience of illustration in some cases, and size ratios and the like between components may be different from those of actual components. Materials, sizes, and the like exemplified in the following description are examples not limiting the present invention, and they can be appropriately changed and implemented within a range not changing the scope and spirit of the invention.

### [All-solid-state battery]

Figure 1 is a cross-sectional schematic view of an all-solid-state battery 100 according to the present embodiment. The all-solid-state battery 100 shown in Figure 1 includes a power generation element 40 and an exterior body 50. The exterior body 50 covers the periphery of the power generation element 40. The power generation element 40 is connected to the outside through a pair of connected terminals 60 and 62. Figure 1 shows a laminate battery, but a wound battery may be used. The all-solid-state battery 100 is used as, for example, a laminate battery, a rectangular battery, a cylindrical battery, a coin battery, or a button battery.

### <Power generation element>

The power generation element 40 includes a solid electrolyte layer 10, a positive electrode 20, and a negative electrode 30. The power generation element 40 is charged or discharged by transferring ions between the positive electrode 20 and the negative electrode 30 via the solid electrolyte layer 10 and transferring electrons via an external circuit.

In the all-solid-state battery 100 according to the present embodiment, at least one of the positive electrode 20 and the negative electrode 30 contains, in an electrode mixture layer, a compound which contains Li, at least one element selected from among Group 3 to Group 15 elements, and S and in which the peak intensity Ra of SO₃⁻ and the peak intensity Rb of SO₄⁻ obtained by negative ion analysis through time-of-flight secondary ion mass spectrometry satisfy Ra>Rb, but a case in which both the positive electrode 20 and the negative electrode 30 contain the compound will be exemplified below.

### "Positive electrode"

As shown in Figure 1, the positive electrode 20 includes a plate-like (foil-like) positive electrode current collector 22 and a positive electrode mixture layer 24. The positive electrode mixture layer 24 is in contact with at least one surface of the positive electrode current collector 22.

### (Positive electrode current collector)

The positive electrode current collector 22 may be made of an electronically conductive material that can withstand oxidation during charging and is resistant to corrosion.

The positive electrode current collector 22 is made of, for example, a metal such as aluminum, stainless steel, nickel, or titanium, or a conductive resin. The positive electrode current collector 22 may have a powder, foil, punched, or expanded form.

### (Positive electrode mixture layer)

The positive electrode mixture layer 24 contains a positive electrode active material and a solid electrolyte, and may also contain a binder and a conductive assistant. Known binders and conductive assistants can be used. The conductive assistant is, for example, carbon black. The conductive assistant may be, vapor grown carbon fibers, carbon nanotubes, metals or the like.

### (Positive electrode active material)

The positive electrode active material is not particularly limited as long as lithium ions can be reversibly occluded/released and inserted/detached (intercalated/deintercalated), and positive electrode active materials used in known lithium ion secondary batteries can be used. Examples of positive electrode active materials include lithium-containing metal oxides and lithium-containing metal phosphates.

Examples of lithium-containing metal oxides include lithium cobalt oxide (LiCoO₂), lithium nickel oxide (LiNiO₂), lithium manganese spinels (LiMn₂O₄), composite metal oxides represented by General Formula: LiNiₓCo_{y}Mn_{z}O₂ (x+y+z=1), lithium vanadium compounds (LiVOPO₄, Li₃V₂(PO₄)₃), olivine type LiMPO₄ (provided that M is at least one selected from among Co, Ni, Mn, and Fe), and lithium titanate (Li₄Ti₅O₁₂).

In addition, the positive electrode active material may not contain lithium. Examples of such positive electrode active materials include lithium-free metal oxides (MnO₂, V₂O₅, etc.), lithium-free metal sulfides (MoS₂, etc.), lithium-free fluorides (FeF₃, VF₃, etc.), and sulfur-modified polyacrylonitrile. When a positive electrode active material containing no lithium is used, the negative electrode is doped with lithium ions in advance or a negative electrode containing lithium ions is used.

The content of the positive electrode active material in the positive electrode mixture layer 24 is not particularly limited, and is preferably 50 mass% to 98 mass% and more preferably 55 mass% to 95 mass% based on the total mass of the positive electrode active material, the solid electrolyte, the conductive assistant and the binder.

### (Solid electrolyte)

The solid electrolyte contained in the positive electrode mixture layer 24 contains a compound which contains Li, at least one element selected from among Group 3 to Group 15 elements, and S and in which the peak intensity Ra of SO₃⁻ and the peak intensity Rb of SO₄⁻ obtained by negative ion analysis through time-of-flight secondary ion mass spectrometry satisfy Ra>Rb. The configuration in which the solid electrolyte contained in the positive electrode mixture layer 24 contains the compound includes a configuration in which the solid electrolyte contained in the positive electrode mixture layer 24 is composed of the compound. The compound itself is a solid electrolyte (solid electrolyte material).

Here, the solid electrolyte is a substance that can move ions when an electric field is applied from the outside. When the ion conductivity of the solid electrolyte is higher, transfer of ions in the all-solid-state battery becomes smoother and the internal resistance becomes smaller.

It is preferable that the peak intensity ratio R1 (Ra/Rb) of the peak intensity Ra of SO₃⁻ to the peak intensity Rb of SO₄⁻ in the compound satisfy 6.0>R1>1.0. When R1 satisfies the inequality, the ion conductivity of the compound is 0.1 mS/cm or more.

It is more preferable that the peak intensity ratio R1 (Ra/Rb) of the peak intensity Ra of SO₃⁻ to the peak intensity Rb of SO₄⁻ in the compound satisfy 1.8>R1>1.2. When R1 satisfies the inequality, the ion conductivity of the compound is 0.5 mS/cm or more.

It is still more preferable that the peak intensity ratio R1 (Ra/Rb) of the peak intensity Ra of SO₃⁻ to the peak intensity Rb of SO₄⁻ in the compound satisfy 1.7>R1>1.4. When R1 satisfies the inequality, the ion conductivity of the compound is 1 mS/cm or more.

In addition, the compound may be one in which, in negative ion analysis through time-of-flight secondary ion mass spectrometry, an SO⁻ peak, an SO₂⁻ peak, an SO₃⁻ peak, and an SO₄⁻ peak are detected, and among the four peaks, the SO₃⁻ peak has a strongest peak intensity.

### (Negative ion analysis through time-of-flight secondary ion mass spectrometry)

Time-of-flight secondary ion mass spectrometry (TOF-SIMS) is a technique in which ion beams (primary ions) are emitted to the surface of a solid sample, and ions (secondary ions) released from the surface are mass-separated based on the difference in their flight times (the flight time is proportional to the square root of the ion mass).

In the original measured TOF-SIMS spectrum data, the horizontal axis represents the time and the vertical axis represents the ion count number (intensity), but when the time axis is converted to the mass number, the horizontal axis represents the mass number, and the secondary ion mass distribution, that is, the mass spectrum, is obtained.

The "peak intensity of SO₃⁻" is the count number of SO₃⁻ (negative ions) detected. In addition, the "peak intensity of SO₄⁻" is the count number of SO₄⁻ (negative ions) detected. Therefore, when the peak intensity Ra of SO₃⁻ and the peak intensity Rb of SO₄⁻ satisfy Ra>Rb, it means that the count number of SO₃⁻ (negative ions) detected is larger than the count number of SO₄⁻ (negative ions) detected.

The compound contained in the solid electrolyte contained in the positive electrode mixture layer 24 contains Li, at least one element selected from among Group 3 to Group 15 elements, and S, the peak intensity Ra of SO₃⁻ is higher than the peak intensity Rb of SO₄⁻ in TOF-SIMS, and thereby the ion conductivity can be improved.

In the case of the tetrahedral structure of SO₄ that exhibits high ion conductivity, it is considered that the bonding destinations of O (oxygen) differ, and SO₃⁻ is detected in addition to SO₄⁻ by TOF-SIMS. Here, it is also considered that lattice distortion occurs due to the different structure of SO₄, and the ion conductivity becomes higher.

In the present invention, it has been clarified that, in the solid electrolyte containing Li, at least one element selected from among Group 3 to Group 15 elements, and S, the peak intensity ratio R1 (Ra/Rb) of the peak intensity Ra of SO₃⁻ to the peak intensity Rb of SO₄⁻ in the TOF-SIMS mass spectrum can be used as an index of ion conductivity.

The compound can be represented by the following Formula (1).

LiaEbGeXd··· (1)

(in Formula (1), E is at least one element selected from the group consisting of Al, Sc, Y, Zr, Hf, and lanthanoids, G is at least one group selected from the group consisting of SO₃, SO₄, SO₅, S₂O₃, S₂O₄, S₂O₅, S₂O₆, S₂O₇, and S₂O₈, X is at least one element selected from the group consisting of F, Cl, Br, and I, and 0.5≤a<6, 0<b<2, 0.1<c≤6, 0<d≤6.1).

In Formula (1), a satisfies 0.5<a<6, and when E is Al, Sc, Y, or a lanthanoid, it is preferable that 2.0≤a≤4.0 be satisfied, and it is more preferable that 2.5≤a≤3.5 be satisfied. When E is Zr or Hf, a preferably satisfies 1.0≤a≤3.0, and more preferably satisfies 1.5≤a≤2.5. In the compound represented by Formula (1), when a is 0.5≤a<6, the content of Li contained in the compound becomes appropriate, and the ion conductivity of the solid electrolyte layer 10 becomes high.

In Formula (1), E is an essential component, and is at least one element selected from the group consisting of Al, Sc, Y, Zr, Hf, and lanthanoids. E improves the ion conductivity of the solid electrolyte. b satisfies 0<b<2. Since the effect obtained by incorporating E is obtained more effectively, b preferably satisfies 0.6≤b. In addition, E is an element that forms the framework of the solid electrolyte. When b satisfies b≤1, this is preferable because the solid electrolyte has a low density.

In the halide-based solid electrolyte represented by Formula (1), 0.1<c≤6 is satisfied. Since the effect of widening the potential window on the reduction side due to the inclusion of G becomes more significant, c more preferably satisfies 0.5≤c. c preferably satisfies c≤3 so that the ion conductivity of the solid electrolyte does not decrease due to an excessively high G content.

In the halide-based solid electrolyte represented by Formula (1), X is an essential component. X is at least one selected from the group consisting of F, Cl, Br, and I. X has a large ionic radius per valence. Therefore, when the halide-based solid electrolyte represented by Formula (1) contains X, lithium ions flow easily, and the effect of increasing the ion conductivity is obtained. It is preferable to contain Cl as X because the solid electrolyte has high ion conductivity. In addition, when X contains F, X preferably contains F and two or more selected from the group consisting of Cl, Br, and I because the solid electrolyte has high ion conductivity.

When X is F, the solid electrolyte has sufficiently high ion conductivity and excellent oxidation resistance. When X is Cl, the solid electrolyte has high ion conductivity and a favorable balance between oxidation resistance and reduction resistance. When X is Br, the solid electrolyte has sufficiently high ion conductivity and a favorable balance between oxidation resistance and reduction resistance. When X is I, the solid electrolyte has high ion conductivity.

In the halide-based solid electrolyte represented by Formula (1), d satisfies 0<d≤6.1. d preferably satisfies 1≤d. If d satisfies 1≤d, when the solid electrolyte is pressure-molded into pellets, the strength of the pellets increases. In addition, when d satisfies 1≤d, the ion conductivity of the solid electrolyte becomes high. In addition, d preferably satisfies d≤5 so that the potential window of the solid electrolyte does not become narrow due to insufficient G because the content of X is too large.

Examples of halide-based solid electrolytes represented by Formula (1) include Li₂Zr(SO₄)Cl₄, Li₂Zr(SO₃)Cl₄, Li₂Zr(SO₄)_{0.3}(SO₃)_{0.7}Cl₄, Li₂Zr(SO₄)_{0.5}(SO₃)_{0.5}Cl₄, Li₂Zr(SO₄)_{0.7}(SO₃)_{0.3}Cl₄, Li₂Zr(S₂O₃)Cl₄, Li₂Zr(SO₄)_{0.3}(S₂O₃)_{0.7}Cl₄, Li₂Zr(SO₄)_{0.5}(S₂O₃)_{0.5}Cl₄, and Li₂Zr(SO₄)_{0.7}(S₂O₃)_{0.3}Cl₄.

### (Binder)

The binder binds the positive electrode active material, the solid electrolyte and the conductive assistant to each other within the positive electrode mixture layer 24, and firmly adheres the positive electrode mixture layer 24 and the positive electrode current collector 22. The positive electrode mixture layer 24 preferably contains a binder. It is preferable that the binder have oxidation resistance and favorable adhesiveness.

Examples of binders used in the positive electrode mixture layer 24 include polyvinylidene fluoride (PVDF) or its copolymers, polytetrafluoroethylene (PTFE), polyamide (PA), polyimide (PI), polyamideimide (PAI), polybenzimidazole (PBI), polyethersulfone (PES), polyacrylic acid (PA) and its copolymers, metal ion crosslinked products of polyacrylic acid (PA) and its copolymers, polypropylene (PP) grafted with maleic anhydride, polyethylene (PE) grafted with maleic anhydride, and mixtures thereof. Among these, PVDF is particularly preferably used as the binder.

The content of the solid electrolyte in the positive electrode mixture layer 24 is not particularly limited, and is preferably 1 mass% to 50 mass% and more preferably 5 mass% to 30 mass% based on the total mass of the positive electrode active material, the solid electrolyte, the conductive assistant and the binder.

The content of the binder in the positive electrode mixture layer 24 is not particularly limited, and is preferably 0.1 mass% to 10 mass% and more preferably 0.1 mass% to 5 mass% based on the total mass of the positive electrode active material, the solid electrolyte, the conductive assistant and the binder. When the amount of the binder is too small, it tends to be difficult to form the positive electrode 20 with sufficient adhesive strength. On the other hand, when the amount of the binder is too large, general binders are electrochemically inert and do not contribute to the discharge capacity, and it tends to be difficult to obtain a sufficient volume or mass energy density.

### (Conductive assistant)

The conductive assistant improves the electron conductivity of the positive electrode mixture layer 24. A known conductive assistant can be used. The conductive assistant is, for example, a carbon material such as carbon black, graphite, carbon nanotubes, or graphene, a metal such as aluminum, copper, nickel, stainless steel, iron, or amorphous metal, a conductive oxide such as ITO, or a mixture thereof. The conductive assistant may be in the form of powder or fiber.

The content of the conductive assistant in the positive electrode mixture layer 24 is not particularly limited. When a conductive assistant is added, generally, the mass proportion of the conductive assistant based on the total mass of the positive electrode active material, the solid electrolyte, the conductive assistant and the binder is preferably 0.5 mass% to 20 mass% and more preferably 1 mass% to 5 mass%.

### "Negative electrode"

As shown in Figure 1, the negative electrode 30 includes a negative electrode current collector 32 and a negative electrode mixture layer 34. The negative electrode mixture layer 34 is in contact with the negative electrode current collector 32. In the following description of the "negative electrode," descriptions of components common to the "positive electrode" may be omitted.

### (Negative electrode current collector)

The negative electrode current collector 32 only needs to have electron conductivity. The negative electrode current collector 32 is, for example, a metal such as copper, aluminum, nickel, stainless steel, or iron, or a conductive resin. The negative electrode current collector 32 may have a powder, foil, punched, or expanded form.

### (Negative electrode mixture layer)

The negative electrode mixture layer 34 contains a negative electrode active material and a solid electrolyte.

The negative electrode mixture layer 34 may contains a binder and a conductive assistant. Known binders and conductive assistants can be used. The conductive assistant is, for example, carbon black. The conductive assistant may be, vapor grown carbon fibers, carbon nanotubes, metals or the like.

The binder and the conductive assistant may be of the same types and used in the same proportions as described for the positive electrode mixture layer 24.

The negative electrode active material is not particularly limited as long as it can reversibly occlude and release lithium ions and insert and detach lithium ions. As the negative electrode active material, negative electrode active materials used in known lithium ion secondary batteries can be used.

Examples of negative electrode active materials include carbon materials such as natural graphite, artificial graphite, mesocarbon microbeads, mesocarbon fibers (MCF), cokes, glassy carbon, and a fired organic compound product, metals that can be combined with lithium such as Si, SiOx, Sn, and aluminum, alloys thereof, composite materials of these metals and carbon materials, oxides such as lithium titanate (Li₄Ti₅O₁₂) and SnO₂, sulfur-modified polyacrylonitrile, and metallic lithium. The negative electrode active material is preferably natural graphite or lithium titanate (Li₄Ti₅O₁₂).

The content of the negative electrode active material in the negative electrode mixture layer 34 is not particularly limited, and is preferably 50 mass% to 98 mass% and more preferably 55 mass% to 95 mass% based on the total mass of the negative electrode active material, the solid electrolyte, the conductive assistant and the binder.

### (Solid electrolyte)

Like the positive electrode mixture layer 24, the solid electrolyte contained in the negative electrode mixture layer 34 contains a compound which contains Li, at least one element selected from among Group 3 to Group 15 elements, and S and in which the peak intensity Ra of SO₃⁻ and the peak intensity Rb of SO₄⁻ obtained by negative ion analysis through time-of-flight secondary ion mass spectrometry satisfy Ra>Rb. The configuration in which the solid electrolyte contained in the negative electrode mixture layer 34 contains the compound includes a configuration in which the solid electrolyte contained in the negative electrode mixture layer 34 is composed of the compound.

The compound can have the same structure as that described for the positive electrode mixture layer 24. The description thereof will be omitted below.

The content of the solid electrolyte in the negative electrode mixture layer 34 is not particularly limited, and is preferably 1 mass% to 60 mass% and more preferably 10 mass% to 55 mass% based on the total mass of the negative electrode active material, the solid electrolyte, the conductive assistant and the binder.

The content of the binder in the negative electrode mixture layer 34 is not particularly limited, and is preferably 0.1 mass% to 10 mass% and more preferably 0.1 mass% to 5 mass% based on the total mass of the negative electrode active material, the solid electrolyte, the conductive assistant and the binder. When the amount of the binder is too small, it tends to be difficult to form the negative electrode 30 with sufficient adhesive strength. On the other hand, when the amount of the binder is too large, general binders are electrochemically inert and do not contribute to the discharge capacity, and it tends to be difficult to obtain a sufficient volume or mass energy density.

The content of the conductive assistant in the negative electrode mixture layer 34 is not particularly limited. When a conductive assistant is added, generally, the mass proportion of the conductive assistant based on the total mass of the negative electrode active material, the solid electrolyte, the conductive assistant and the binder is preferably 0.5 mass% to 20 mass% and more preferably 1 mass% to 5 mass%.

### "Solid electrolyte layer"

The solid electrolyte layer 10 is interposed between the positive electrode 20 and the negative electrode 30. The solid electrolyte layer 10 contains a solid electrolyte that can move ions by an externally applied voltage. For example, the solid electrolyte conducts lithium ions and restricts movement of electrons.

The solid electrolyte contains, for example, lithium. The solid electrolyte may be, for example, an oxide material, a sulfide material, or a halide material. In addition, the compound (solid electrolyte) contained in the electrode according to the present embodiment described above may be used or may be partially contained.

The solid electrolyte may be in the form of powder (particle) or in the form of a sintered component obtained by sintering powder. In addition, the solid electrolyte may be a molded product obtained by compressing and molding powder, a molded product obtained by molding a mixture of powder and a binder, or a coating film formed by applying a paint containing powder, a binder and a solvent, and then heating it to remove the solvent.

The solid electrolyte may be, for example, a halide-based solid electrolyte represented by the following Formula (2).

LiaEbGcXd··· (2)

In Formula (2), a satisfies 0.5<a<6, and when E is Al, Sc, Y, or a lanthanoid, it is preferable that 2.0≤a≤4.0 be satisfied, and it is more preferable that 2.5≤a≤3.5 be satisfied. When E is Zr or Hf, a preferably satisfies 1.0≤a≤3.0, and more preferably satisfies 1.5≤a≤2.5. In the compound represented by Formula (2), when a is 0.5≤a<6, the content of Li contained in the compound becomes appropriate, and the ion conductivity of the solid electrolyte layer 10 becomes high.

In Formula (2), E is an essential component, and is at least one element selected from the group consisting of Al, Sc, Y, Zr, Hf, and lanthanoids. E improves the ion conductivity of the solid electrolyte. b satisfies 0<c<2. Since the effect obtained by incorporating E is obtained more effectively, b preferably satisfies 0.6≤b. In addition, E is an element that forms the framework of the solid electrolyte. When b satisfies b≤1, this is preferable because the solid electrolyte has a low density.

In the halide-based solid electrolyte represented by Formula (2), 0.1<c≤6 is satisfied. Since the effect of widening the potential window on the reduction side due to the inclusion of G becomes more significant, c more preferably satisfies 0.5≤c. c preferably satisfies c≤3 so that the ion conductivity of the solid electrolyte does not decrease due to an excessively high G content.

In the halide-based solid electrolyte represented by Formula (2), X is an essential component. X is at least one selected from the group consisting of F, Cl, Br, and I. X has a large ionic radius per valence. Therefore, when the halide-based solid electrolyte represented by Formula (2) contains X, lithium ions flow easily, and the effect of increasing the ion conductivity is obtained. It is preferable to contain Cl as X because the solid electrolyte has high ion conductivity. In addition, when X contains F, X preferably contains F and two or more selected from the group consisting of Cl, Br, and I because the solid electrolyte has high ion conductivity.

When X is F, the solid electrolyte has sufficiently high ion conductivity and excellent oxidation resistance. When X is Cl, the solid electrolyte has high ion conductivity and a favorable balance between oxidation resistance and reduction resistance. When X is Br, the solid electrolyte has sufficiently high ion conductivity and a favorable balance between oxidation resistance and reduction resistance. When X is I, the solid electrolyte has high ion conductivity.

In the halide-based solid electrolyte represented by Formula (2), d satisfies 0<d≤6.1. d preferably satisfies 1≤d. If d satisfies 1≤d, when the solid electrolyte is pressure-molded into pellets, the strength of the pellets increases. In addition, when d satisfies 1≤d, the ion conductivity of the solid electrolyte becomes high. In addition, d preferably satisfies d≤5 so that the potential window of the solid electrolyte does not become narrow due to insufficient G because the content of X is too large.

The halide-based solid electrolyte represented by Formula (2) is, for example, Li₂Zr(SO₄)Cl₄, Li₂Zr(SO₃)Cl₄, Li₂Zr(SO₄)_{0.3}(SO₃)_{0.7}Cl₄, Li₂Zr(SO₄)_{0.5}(SO₃)_{0.5}Cl₄, Li₂Zr(SO₄)_{0.7}(SO₃)_{0.3}Cl₄, Li₂Zr(S₂O₃)Cl₄, Li₂Zr(SO₄)_{0.3}(S₂O₃)_{0.7}Cl₄, Li₂Zr(SO₄)_{0.5}(S₂O₃)_{0.5}Cl₄, or Li₂Zr(SO₄)_{0.7}(S₂O₃)_{0.3}Cl_{4.}

In addition, the solid electrolyte may be a sulfide-based solid electrolyte, and a compound containing Li, S, Si and/or P can be used as the sulfide-based solid electrolyte. The sulfide-based solid electrolyte may further contain Ge, Cl, Br, or I. The sulfide-based solid electrolyte may be amorphous, crystalline or of an argyrodite type. Examples of sulfide-based solid electrolytes include Li₂S-P₂S₅-based solid electrolytes (Li₇P₃S₁₁, Li₃PS₄, Li₈P₂S₉, etc.), Li₂S-SiS₂, LiI-Li₂S-SiS₂, LiI-Li₂S-P₂S₅, LiI-LiBr-Li₂S-P₂S₅, Li₂S-P₂S₅-GeS₂-based solid electrolytes (Li₁₃GeP₃S₁₆, Li₁₀GeP₂S₁₂, etc.), LiI-Li₂S-P₂O₅, LiI-Li₃PO₄-P₂S₅, and Li₇₋ₓPS₆₋ₓClₓ (x is 1.0 to 1.9).

The sulfide-based solid electrolyte may be a compound represented by the following Formula (3).

LiqMrPsOtXuSv··· (3)

In Formula (3), Li is lithium, M is a tetravalent metal, P is phosphorus, O is oxygen, S is sulfur, X is at least one selected from the group consisting of F, Cl, Br, and I, q, r, s, t, u, and v are numbers that satisfy 1≤q≤20, 0≤r≤2, 1≤s≤5, 0≤t≤5, 0≤u≤5, v=q/2+2×r+2.5×s-t-u/2, respectively. M is preferably Si or Ge.

### <Exterior body>

The exterior body 50 accommodates the power generation element 40 therein. The exterior body 50 prevents water from entering from the outside to the inside. For example, as shown in Figure 1, the exterior body 50 includes a metal foil 52 and a resin layer 54 laminated on each surface of the metal foil 52. The exterior body 50 is a metal laminate film in which the metal foil 52 is coated with the resin layer 54 from both sides.

The metal foil 52 is, for example, an aluminum foil or a stainless steel foil. For the resin layer 54, for example, a resin film such as polypropylene can be used. The material constituting the resin layer 54 may be different between the inside and the outside. For example, a polymer having a high melting point, for example, polyethylene terephthalate (PET), polyamide (PA) or the like can be used as the outer material, and polyethylene (PE), polypropylene (PP) or the like can be used as the inner material.

### <Terminal>

The terminals 60 and 62 are connected to the positive electrode 20 and the negative electrode 30, respectively. The terminal 62 connected to the positive electrode 20 is a positive electrode terminal, and the terminal 60 connected to the negative electrode 30 is a negative electrode terminal. The terminals 60 and 62 are responsible for electrical connection with the outside. The terminals 60 and 62 are formed of a conductive material such as aluminum, nickel, copper or the like. The connection method may be welding or screwing. In order to prevent short circuiting, it is preferable to protect the terminals 60 and 62 with an insulation tape.

### [Method of producing all-solid-state battery]

Next, a method of producing an all-solid-state battery according to the present embodiment will be described. The all-solid-state battery according to the present embodiment contains the compound (solid electrolyte) in at least one of the positive electrode and the negative electrode. That is, at least one of the positive electrode and the negative electrode contains a compound which contains Li, at least one element selected from among Group 3 to Group 15 elements, and S and in which, in TOF-SIMS, the peak intensity Ra of SO₃⁻ and the peak intensity Rb of SO₄⁻ satisfy Ra>Rb.

First, a solid electrolyte is prepared. The solid electrolyte includes both a solid electrolyte constituting the solid electrolyte layer and the compound (solid electrolyte) contained in the electrode.

The solid electrolyte can be produced by, for example, a method of mixing powdered raw materials containing predetermined elements at a predetermined molar ratio and causing a mechanochemical reaction. When the mechanochemical reaction is performed, the state of SxOy after synthesis is adjusted to be different. Specifically, by changing the autorotation speed and revolution speed of the planetary ball mill, the synthesis time, the state of powdered raw materials when added, and the atmosphere inside the pot, it is possible to retain unreacted raw material components.

When the powdered raw material contains a halide raw material, the halide raw material tends to evaporate when the temperature increases. Therefore, a halogen may be supplemented by making a halogen gas coexist in the atmosphere during sintering. In addition, when the powdered raw material contains a halide raw material, sintering may be performed by a hot press method using a highly sealable mold. In this case, since the mold is highly sealable, evaporation of the halide raw material due to sintering can be restricted. When sintering is performed in this manner, a solid electrolyte in the form of a sintered component made of a compound having a predetermined composition is obtained.

Next, the positive electrode 20 is prepared. The positive electrode is produced by applying a paste containing a positive electrode active material onto the positive electrode current collector 22 and drying it to form the positive electrode mixture layer 24. The solid electrolyte may be added to the paste containing a positive electrode active material.

Next, the negative electrode 30 is prepared. The negative electrode is produced by applying a paste containing a negative electrode active material onto the negative electrode current collector 32 and drying it to form the negative electrode mixture layer 34. The solid electrolyte may be added to the paste containing a negative electrode active material.

The power generation element 40 can be produced using, for example, a powder molding method. A guide having a hole is installed above the positive electrode 20, and the inside of the guide is filled with a solid electrolyte. Then, the surface of the solid electrolyte is leveled and the negative electrode 30 is superimposed on the solid electrolyte. Thereby, the solid electrolyte is interposed between the positive electrode 20 and the negative electrode 30. Then, pressure is applied the positive electrode 20 and the negative electrode 30, and thus the solid electrolyte is press-molded. When press-molding is performed, a laminated body in which the positive electrode 20, the solid electrolyte layer 10, and the negative electrode 30 are laminated in this order is obtained.

Next, external terminals are welded to the positive electrode current collector 22 of the positive electrode 20 and the negative electrode current collector 32 of the negative electrode 30 that form the laminated body by a known method, and the positive electrode current collector 22 or the negative electrode current collector 32 and the external terminal are electrically connected. Then, the laminated body connected to the external terminal is accommodated in the exterior body 50, and the opening of the exterior body 50 is sealed by heat sealing. Through the above steps, the all-solid-state battery 100 of the present embodiment is obtained.

Since the all-solid-state battery 100 according to the present embodiment contains the above solid electrolyte, it enables smooth conduction of Li ions and has low internal resistance.

The embodiments of the present invention have been described in detail above with reference to the drawings, but configurations and combinations thereof in the embodiments are only examples, and additions, omissions, substitutions and other modifications of the configurations can be made without departing from the spirit and scope of the present invention.

### [Examples]

### <Positive Electrode Examples>

### [Positive Electrode Example 1]

### (Production of compound (solid electrolyte))

A compound (solid electrolyte) according to the present embodiment was produced as follows.

In a glove box containing an Ar gas atmosphere, the powdered raw material was weighed out so that the molar ratio of lithium sulfate (Li₂SO₄) and zirconium chloride (ZrCl₄) was a ratio of 1:1. The powdered raw material was put into a zirconia sealed container for a planetary ball mill containing zirconia balls in advance. Next, a lid was set on the sealed container, the lid was screwed onto the container main body, and the space between the lid and the container was sealed with a polyimide tape. The polyimide tape had an effect of blocking water. Next, the zirconia sealed container was set in a planetary ball mill.

A mechanochemical reaction was caused for 24 hours at an autorotation speed of 500 rpm and a revolution speed of 500 rpm (the autorotation direction and the revolution direction were opposite to each other) to obtain a Li₂Zr(SO₄)Cl₄ powder of Positive Electrode Example 1.

The planetary ball mill was provided in an Ar gas atmosphere. The zirconia sealed container for the planetary ball mill was screwed and additionally sealed with a polyimide tape, and when the zirconia sealed container was set in the planetary ball mill, since the zirconia sealed container was firmly pressed and fixed in the structure, it is thought that almost no water was mixed into the zirconia sealed container from the air.

### <Mass spectrum measurement by TOF-SIMS>

The mass spectrum of the solid electrolyte (Li₂Zr(SO₄)Cl₄) of Positive Electrode Example 1 was measured through time-of-flight secondary ion mass spectrometry, and the peak intensity Ra of SO₃⁻ and the peak intensity Rb of SO₄⁻ were obtained.

The following devices and conditions were used for measurement in TOF-SIMS.
(1) device: TOF-SIMS5 (commercially available from ION-TOF)
(2) measurement conditions
   Measurement mode: Spectrometry
   Primary ion: Bi₃⁺⁺
   Acceleration voltage: 25 kV
   Measurement region area :40,000 µm² (200 µm×200 µm)
   Measure ion species: Negative
   Electron neutralization: yes

### <Measurement of ion conductivity>

The ion conductivity of the solid electrolyte (Li₂ZrSO₄Cl₄) of Positive Electrode Example 1 was measured as follows.

In a glove box containing a circulating argon gas at a dew point of about -70°C, the obtained solid electrolyte (Li₂Zr(SO₄)Cl₄) powder was filled into a press-molding die and press-molded at a load of about 30 KN to produce a cell for ion conductivity measurement.

The press-molding die was composed of a polyetheretherketonet (PEEK) cylinder with a diameter of 10 mm and an upper punch and lower punch made of an SKD11 material and with a diameter of 9.99 mm.

Then, a stainless steel disk and a Teflon (registered trademark) disk, each with a diameter of 50 mm, a thickness of 5 mm, and four screw holes, were prepared and set in a press-molding die as follows. The stainless steel disk/the Teflon (registered trademark) disk/the press-molding die/the Teflon (registered trademark) disk/the stainless steel disk were laminated in this order, and the four screws were tightened with a torque of about 3 N·m. In addition, screws were inserted into the screw holes provided on the sides of the upper and lower punches to form external connection terminals.

The external connection terminals were connected to a potentiostat (VersaSTAT3, commercially available from Princeton Applied Research) including a frequency response analyzer, and the ion conductivity was measured using an impedance measurement method. The measurement was performed in a measurement frequency range of 1 MHz to 0.1 Hz at an amplitude of 10 mV and a temperature of 25°C. The ion conductivity of the compound (solid electrolyte) (Li₂Zr(SO₄)Cl₄) of Positive Electrode Example 1 was 2.4×10⁻³ S/cm.

### (Production of positive electrode mixture)

In order to produce a positive electrode mixture, lithium cobalt oxide (LiCoO₂) as a positive electrode active material and Li₂Zr(SO₄)Cl₄ of Positive Electrode Example 1 were prepared. The positive electrode active material and Li₂Zr(SO₄)Cl₄ of Positive Electrode Example 1 were weighed out to achieve 65 wt% and 35 wt%, respectively. The weighed positive electrode active material and Li₂Zr(SO₄)Cl₄ of Positive Electrode Example 1 were mixed in an agate mortar for 15 minutes to obtain a positive electrode mixture.

### (Production of half-cell for charging and discharging)

A half-cell for charging and discharging was produced in a glove box with a dew point of about -70°C.

A pellet producing jig was used to prepare a half-cell. The pellet producing jig included a polyetheretherketonet (PEEK) cylinder with an outer diameter of 30 mm, an inner diameter of 10 mm, and a height of 20 mm, and an upper punch and lower punch with a diameter of 9.99 mm. The material of the upper and lower punches was die steel (SKD11 material).

The lower punch was inserted into the PEEK cylinder, and 110 mg of the solid electrolyte Li₂Zr(SO₄)Cl₄ was placed on the lower punch. Next, the PEEK cylinder was vibrated to level the surface of the solid electrolyte, the upper punch was then inserted onto the solid electrolyte, and pressing was performed with a load of 373 MPa using a press machine to form a solid electrolyte layer.

Next, the upper punch was removed and 15 mg of the positive electrode mixture was poured onto the solid electrolyte layer. Next, the PEEK cylinder was vibrated to level the surface of the positive electrode mixture, the upper punch was then inserted onto the positive electrode mixture, and pressing was performed with a load of 373 MPa using a press machine. Next, the lower punch was removed, a lithium foil with a diameter of 10 mm and a thickness of 100 µm was placed on the solid electrolyte layer, and the lower punch was inserted. The half-cell had a configuration of (LiCoO₂+Li₂Zr(SO₄)Cl₄)/Li₂Zr(SO₄)Cl₄/Li.

In addition, two stainless steel sheets with a diameter of 50 mm and a thickness of 5 mm and two Bakelite (registered trademark) sheets with a diameter of 50 mm and a thickness of 2 mm were prepared. Next, four holes through which screws would pass were made in each of the two stainless steel sheets and the two Bakelite (registered trademark) sheets. When the half-cell, two stainless steel sheets and two Bakelite (registered trademark) sheets were laminated, the holes through which screws would pass were made at positions at which the two stainless steel sheets and the two Bakelite (registered trademark) sheets overlapped in a plan view and did not overlap the half-cell in a plan view.

Then, the stainless steel sheet, the Bakelite (registered trademark) sheet, the half-cell, the Bakelite (registered trademark) sheet, and the stainless steel sheet were laminated in this order, and screws were inserted into the screw holes and tightened with a torque of 1 N·m. In this manner, a half-cell in which the upper punch and the lower punch of the electrochemical cell were insulated by the Bakelite (registered trademark) sheet was obtained. Next, the half-cell was left in a thermostatic chamber at 25°C for 48 hours to stabilize an open circuit voltage.

### <Measurement of rate property>

The produced half-cell was charged and discharged under the following conditions. The voltage range was 2.8 V to 4.2 V. Charging was performed at a constant current of 0.1C, and after the constant voltage, charging was completed when the current reached a value equivalent to 0.05C. Discharging was performed at 0.1C and 1.0C, and the ratio (rate property (unit:%)) of the discharge capacity at 1C to the discharge capacity at 0.1C, which was defined as 100%, was determined. The obtained results are shown in Table 1.

The combination of raw materials, synthesis time and synthesis step features for the solid electrolyte (compound) of Positive Electrode Example 1 are summarized in the following Table 1. In addition, the measurement results of the properties of the solid electrolytes are summarized in the following Table 2. In addition, the measurement results of the rate property of the half-cells are summarized in the following Table 3.

Here, the contents of Table 1 and Table 2 are common to positive electrode examples and negative electrode examples, and for example, Example 1 refers to the solid electrolyte of Positive Electrode Example 1 and the solid electrolyte of Negative Electrode Example 1.

### [Positive Electrode Example 2]

A solid electrolyte (Li₂Zr(SO₄)Cl₄) of Positive Electrode Example 2 was synthesized in the same manner as in Positive Electrode Example 1 except that the raw materials were weighed out in a glove box containing a mixed atmosphere of dry air with a dew point of about -40°C and argon gas at a volume ratio of 20%:80%, and similarly, synthesis was performed by placing a planetary ball mill in a mixed atmosphere of dry air with a dew point of about -40°C and argon gas at a volume ratio of 20%:80%, and thereby a powdered solid electrolyte (Li₂Zr(SO₄)Cl₄) of Positive Electrode Example 2 was obtained.

The combination of raw materials, synthesis time and synthesis step features for the solid electrolyte (compound) of Positive Electrode Example 2 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 3]

A solid electrolyte (Li₂Zr(SO₄)Cl₄) of Positive Electrode Example 3 was synthesized in the same manner as in Positive Electrode Example 1 except that the raw materials were weighed out in a glove box containing a mixed atmosphere of dry air with a dew point of about -40°C and argon gas at a volume ratio 40%:60%, and similarly, synthesis was performed by placing a planetary ball mill in a mixed atmosphere of dry air with a dew point of about -40°C and argon gas at a volume ratio 40%:60%, and thereby a powdered solid electrolyte (Li₂Zr(SO₄)Cl₄) of Positive Electrode Example 3 was obtained.

The combination of raw materials, synthesis time and synthesis step features for the solid electrolyte (compound) of Positive Electrode Example 3 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 4]

A solid electrolyte (Li₂Zr(SO₃)Cl₄) of Positive Electrode Example 4 was synthesized in the same manner as in Positive Electrode Example 1 except that lithium sulfite (Li₂SO₃) and zirconium chloride (ZrCl₄) were used as raw materials, and thereby a powdered solid electrolyte (Li₂Zr(SO₃)Cl₄) of Positive Electrode Example 4 was obtained.

The combination of raw materials, synthesis time and synthesis step features for the solid electrolyte (compound) of Positive Electrode Example 4, are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 5]

A solid electrolyte (Li₂Zr(SO₃)Cl₄) of Positive Electrode Example 5 was synthesized in the same manner as in Positive Electrode Example 4 except that the raw materials were weighed out in a glove box containing a mixed atmosphere of dry air with a dew point of about -40°C and argon gas at a volume ratio 40%:60%, and similarly, synthesis was performed by placing a planetary ball mill in a mixed atmosphere of dry air with a dew point of about -40°C and argon gas at a volume ratio 40%:60%, and thereby a powdered solid electrolyte (Li₂Zr(SO₃)Cl₄) was obtained.

The combination of raw materials, synthesis time and synthesis step features for the solid electrolyte (compound) of Positive Electrode Example 5 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 6]

A solid electrolyte (Li₂Zr(SO₄)_{0.3}(SO₃)_{0.7}Cl₄) of Positive Electrode Example 6 was synthesized in the same manner as in Positive Electrode Example 1 except that lithium sulfate (Li₂SO₄), lithium sulfite (Li₂SO₃) and zirconium chloride (ZrCl₄) as raw materials were weighed out at a molar ratio of 3:7:10 to prepare powdered raw materials, and thereby a powdered solid electrolyte (Li₂Zr(SO₄)_{0.3}(SO₃)_{0.7}Cl₄) of Positive Electrode Example 6 was obtained.

The combination of raw materials, synthesis time and synthesis step features for the solid electrolyte (compound) of Positive Electrode Example 6 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 7]

A solid electrolyte (Li₂Zr(SO₄)_{0.5}(SO₃)_{0.5}Cl₄) of Positive Electrode Example 7 was synthesized in the same manner as in Positive Electrode Example 1 except that lithium sulfate (Li₂SO₄), lithium sulfite (Li₂SO₃) and zirconium chloride (ZrCl₄) as raw materials were weighed out at a molar ratio of 1:1:2 to prepare powdered raw materials, the raw materials were weighed out in a glove box containing a mixed atmosphere of dry air with a dew point of about -40°C and argon gas at a volume ratio of 20%:80%, and similarly, synthesis was performed by placing a planetary ball mill in a mixed atmosphere of dry air with a dew point of about -40°C and argon gas at a volume ratio of 20%:80%, and thereby a powdered solid electrolyte (Li₂Zr(SO₄)_{0.5}(SO₃)_{0.5}Cl₄) of Positive Electrode Example 7 was obtained.

The combination of raw materials, synthesis time and synthesis step features for the solid electrolyte (compound) of Positive Electrode Example 7 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 8]

A solid electrolyte (Li₂Zr(SO₄)_{0.7}(SO₃)_{0.3}Cl₄) of Positive Electrode Example 8 was synthesized in the same manner as in Positive Electrode Example 1 except that lithium sulfate (Li₂SO₄), lithium sulfite (Li₂SO₃) and zirconium chloride (ZrCl₄) as raw materials were weighed out at a molar ratio of 7:3:10 to prepare powdered raw materials, the raw materials were weighed out in a glove box containing a mixed atmosphere of dry air with a dew point of about -40°C and argon gas at a volume ratio 40%:60%, and similarly, synthesis was performed by placing a planetary ball mill in a mixed atmosphere of dry air with a dew point of about -40°C and argon gas at a volume ratio 40%:60%, and thereby a powdered solid electrolyte (Li₂Zr(SO₄)_{0.7}(SO₃)_{0.3}Cl₄) of Positive Electrode Example 8 was obtained.

The combination of raw materials, synthesis time and synthesis step features for the solid electrolyte (compound) of Positive Electrode Example 8 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 9]

A solid electrolyte (Li₂Zr(S₂O₃)Cl₄) of Positive Electrode Example 9 was synthesized in the same manner as in Positive Electrode Example 1 except that Li₂S₂O₃ and zirconium chloride (ZrCl₄) were used as raw materials, and thereby a powdered solid electrolyte (Li₂Zr(S₂O₃)Cl₄) of Positive Electrode Example 9 was obtained.

The combination of raw materials, synthesis time and synthesis step features for the solid electrolyte (compound) of Positive Electrode Example 9 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 10]

A solid electrolyte (Li₂Zr(S₂O₃)Cl₄) of Positive Electrode Example 10 was synthesized in the same manner as in Positive Electrode Example 9 except that the raw materials were weighed out in a glove box containing a mixed atmosphere of dry air with a dew point of about -40°C and argon gas at a volume ratio 40%:60%, and similarly, synthesis was performed by placing a planetary ball mill in a mixed atmosphere of dry air with a dew point of about -40°C and argon gas at a volume ratio 40%:60%, and thereby a powdered Li₂Zr(S₂O₃)Cl₄ of Positive Electrode Example 10 was obtained.

The combination of raw materials, synthesis time and synthesis step features for the solid electrolyte (compound) of Positive Electrode Example 10 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 11]

A solid electrolyte (Li₂Zr(SO₄)_{0.3}(S₂O₃)_{0.7}Cl₄) of Positive Electrode Example 11 was synthesized in the same manner as in Positive Electrode Example 1 except that lithium sulfate (Li₂SO₄), Li₂S₂O₃ and zirconium chloride (ZrCl₄) as raw materials were weighed out at a molar ratio of 3:7:10 to prepare powdered raw materials, and thereby a powdered solid electrolyte (Li₂Zr(SO₄)_{0.3}(S₂O₃)_{0.7}Cl₄ of Positive Electrode Example 11 was obtained.

The combination of raw materials, synthesis time and synthesis step features for the solid electrolyte (compound) of Positive Electrode Example 11 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 12]

A solid electrolyte (Li₂Zr(SO₄)_{0.5}(S₂O₃)_{0.5}Cl₄) of Positive Electrode Example 12 was synthesized in the same manner as in Positive Electrode Example 1 except that lithium sulfate (Li₂SO₄), Li₂S₂O₃ and zirconium chloride (ZrCl₄) as raw materials were weighed out at a molar ratio of 1:1:2 to prepare powdered raw materials, the raw materials were weighed out in a glove box containing a mixed atmosphere of dry air with a dew point of about -40°C and argon gas at a volume ratio of 20%:80%, and similarly, synthesis was performed by placing a planetary ball mill in a mixed atmosphere of dry air with a dew point of about -40°C and argon gas at a volume ratio of 20%:80%, and thereby a powdered solid electrolyte (Li₂Zr(SO₄)_{0.5}(S₂O₃)_{0.5}Cl₄) of Positive Electrode Example 12 was obtained.

The combination of raw materials, synthesis time and synthesis step features for the solid electrolyte (compound) of Positive Electrode Example 12 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 13]

A solid electrolyte (Li₂Zr(SO₄)_{0.7}(S₂O₃)_{0.3}Cl₄) of Positive Electrode Example 13 was synthesized in the same manner as in Positive Electrode Example 1 except that lithium sulfate (Li₂SO₄), Li₂S₂O₃ and zirconium chloride (ZrCl₄) as raw materials were weighed out at a molar ratio of 7:3:10 to prepare powdered raw materials, the raw materials were weighed out in a glove box containing a mixed atmosphere of dry air with a dew point of about -40°C and argon gas at a volume ratio 40%:60%, and similarly, synthesis was performed by placing a planetary ball mill in a mixed atmosphere of dry air with a dew point of about -40°C and argon gas at a volume ratio 40%:60%, and thereby a powdered solid electrolyte (Li₂Zr(SO₄)_{0.7}(S₂O₃)_{0.3}Cl₄) of Positive Electrode Example 13 was obtained.

The combination of raw materials, synthesis time and synthesis step features for the solid electrolyte (compound) of Positive Electrode Example 13 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 14]

A solid electrolyte (Li₆PS₅Cl) of Positive Electrode Example 14 was synthesized in the same manner as in Positive Electrode Example 1 except that lithium sulfide (Li₂S), phosphorus sulfide (P₂S₅) and lithium chloride (LiCl) were weighed out at a molar ratio of 5:1:2 to prepare powdered raw materials, and synthesis was performed by adding all of these powdered raw materials at the same time, and thereby a powdered solid electrolyte (Li₆PS₅Cl) of Positive Electrode Example 14 was obtained.

The combination of raw materials, synthesis time and synthesis step features for the solid electrolyte (compound) of Positive Electrode Example 14 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 15]

A solid electrolyte (Li_{9.54}Si_{1.74}P_{1.44}S_{11.7}Cl_{0.3}) of Positive Electrode Example 15 was synthesized in the same manner as in Positive Electrode Example 1 except that lithium sulfide (Li₂S), silicon sulfide (SiS₂), phosphorus sulfide (P₂S₅) and lithium chloride (LiCl) were weighed out at a molar ratio of 4.62:1.74:0.72:0.3 to prepare powdered raw materials, and synthesis was performed by adding all of these powdered raw materials at the same time, and thereby a solid electrolyte (Li_{9.54}Si_{1.74}P_{1.44}S_{11.7}Cl_{0.3}) was synthesized.

The combination of raw materials, synthesis time and synthesis step features for the solid electrolyte (compound) of Positive Electrode Example 15 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 16]

A solid electrolyte (Li₂Zr(SO₃)Cl₄) of Positive Electrode Example 16 was synthesized in the same manner as in Positive Electrode Example 4 except that a mechanochemical reaction was caused for 48 hours, and thereby a powdered solid electrolyte (Li₂Zr(SO₃)Cl₄) was obtained.

The combination of raw materials, synthesis time and synthesis step features for the solid electrolyte (compound) of Positive Electrode Example 16 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Example 17]

A solid electrolyte (Li₂Zr(SO₃)Cl₄) of Positive Electrode Example 17 was synthesized in the same manner as in Positive Electrode Example 4 except that a mechanochemical reaction was caused for 72 hours, and thereby a powdered solid electrolyte (Li₂Zr(SO₃)Cl₄) was obtained.

The combination of raw materials, synthesis time and synthesis step features for the solid electrolyte (compound) of Positive Electrode Example 17 are summarized in the following Table 1. In addition, the measurement results of the properties of the solid electrolytes are summarized in the following Table 2. In addition, the measurement results of the rate property of the half-cells are summarized in the following Table 3.

### <Positive Electrode Comparative Examples>

### [Positive Electrode Comparative Example 1]

A solid electrolyte (Li₂ZrCl₆) of Positive Electrode Comparative Example 1 was synthesized in the same manner as in Positive Electrode Example 1 except that lithium chloride (LiCl) and zirconium chloride (ZrCl₄) as raw materials were weighed out at a molar ratio of 2:1 to prepare powdered raw materials, and thereby a powdered solid electrolyte (Li₂ZrCl₆) of Positive Electrode Comparative Example 1 was obtained.

The combination of raw materials, synthesis time and synthesis step features for the solid electrolyte (compound) of Positive Electrode Comparative Example 1 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Comparative Example 2]

A solid electrolyte (Li₃YCl₆) of Positive Electrode Comparative Example 2 was synthesized in the same manner as in Positive Electrode Example 1 except that lithium chloride (LiCl) and yttrium chloride (YCl₃) as raw materials were weighed out at a molar ratio of 3:1 to prepare powdered raw materials, and thereby a powdered solid electrolyte (Li₃YCl₆) of Positive Electrode Comparative Example 2 was obtained.

The combination of raw materials, synthesis time and synthesis step features for the solid electrolyte (compound) of Positive Electrode Comparative Example 2 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Comparative Example 3]

A solid electrolyte (Li₃ZrPO₄Cl₄) of Positive Electrode Comparative Example 3 was synthesized in the same manner as in Positive Electrode Example 1 except that lithium phosphate (Li₃PO₄) and zirconium chloride (ZrCl₄) as raw materials were weighed out at a molar ratio of 1:1 to prepare powdered raw materials, and thereby a powdered solid electrolyte (Li₃ZrPO₄Cl₄) of Positive Electrode Comparative Example 3 was obtained.

The combination of raw materials, synthesis time and synthesis step features for the solid electrolyte (compound) of Positive Electrode Comparative Example 3 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Comparative Example 4]

A solid electrolyte (Li₂Zr(SO₄)Cl₄) of Positive Electrode Comparative Example 4 was synthesized in the same manner as in Positive Electrode Example 1 except that the raw materials were weighed out in a glove box containing a mixed atmosphere of dry air with a dew point of about -40°C and argon gas at a volume ratio of 60%:40%, and similarly, synthesis was performed by placing a planetary ball mill in a mixed atmosphere of dry air with a dew point of about -40°C and argon gas at a volume ratio of 60%:40%, and thereby a powdered solid electrolyte (Li₂Zr(SO₄)Cl₄) of Positive Electrode Comparative Example 4 was obtained.

The combination of raw materials, synthesis time and synthesis step features for the solid electrolyte (compound) of Positive Electrode Comparative Example 4 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Comparative Example 5]

A solid electrolyte (Li₂Zr(SO₃)Cl₄) of Positive Electrode Comparative Example 5 was synthesized in the same manner as in Positive Electrode Example 1 except that the raw materials were weighed out in a glove box containing a mixed atmosphere of dry air with a dew point of about -40°C and argon gas at a volume ratio of 60%:40%, and similarly, synthesis was performed by placing a planetary ball mill in a mixed atmosphere of dry air with a dew point of about -40°C and argon gas at a volume ratio of 60%:40%, and thereby a powdered solid electrolyte (Li₂Zr(SO₃)Cl₄) of Positive Electrode Comparative Example 5 was obtained.

The combination of raw materials, synthesis time and synthesis step features for the solid electrolyte (compound) of Positive Electrode Comparative Example 5 are summarized in the following Table 1. In addition, the measurement results of the properties of the solid electrolytes are summarized in the following Table 2. In addition, the measurement results of the rate property of the half-cells are summarized in the following Table 3.

### [Positive Electrode Comparative Example 6]

A solid electrolyte (Li₂Zr(S₂O₃)Cl₄) of Positive Electrode Comparative Example 6 was synthesized in the same manner as in Positive Electrode Example 1 except that the raw materials were weighed out in a glove box containing a mixed atmosphere of dry air with a dew point of about -40°C and argon gas at a volume ratio of 60%:40%, and similarly, synthesis was performed by placing a planetary ball mill in a mixed atmosphere of dry air with a dew point of about -40°C and argon gas at a volume ratio of 60%:40%, and thereby a powdered Li₂Zr(S₂O₃)Cl₄ of Positive Electrode Comparative Example 6 was obtained.

The combination of raw materials, synthesis time and synthesis step features for the solid electrolyte (compound) of Positive Electrode Comparative Example 6 are summarized in the following Table 1. In addition, the measurement results of the properties of the solid electrolytes are summarized in the following Table 2. In addition, the measurement results of the rate property of the half-cells are summarized in the following Table 3.

### <Negative Electrode Example>

The solid electrolytes (compounds) of Negative Electrode Examples 1 to 17 were the same as the solid electrolytes (compounds) of Positive Electrode Examples 1 to 17, respectively, and correspond to the compounds of Examples 1 to 17 shown in Table 1. In addition, the properties of Negative Electrode Examples 1 to 17 correspond to the properties of Examples 1 to 17 shown in Table 2.

**[Table 1]**

| | Compound | LiaEbGcXd | | | | | | | | Raw material | | Synthesis time | Synthesis atmosphere (mixing ratio is volume ratio) |
|---|---|---|---|---|---|---|---|---|---|---|---|---|---|
| | | Li | a | E | b | G | c | X | d | Substance A | Substance B | | |
| Example 1 | Li₂Zr(SO₄)Cl₄ | Li | 2 | Zr | 1 | SO₄ | 1 | Cl | 4 | Li₂SO₄ | ZrCl₄ | 24 | Synthesized in Ar gas atmosphere |
| Example 2 | Li₂Zr(SO₄)Cl₄ | Li | 2 | Zr | 1 | SO₄ | 1 | Cl | 4 | Li₂SO₄ | ZrCl₄ | 24 | Dry air with dew point of -40°C/Ar gas=20%/80% |
| Example 3 | Li₂Zr(SO₄)Cl₄ | Li | 2 | Zr | 1 | SO₄ | 1 | Cl | 4 | Li₂SO₄ | ZrCl₄ | 24 | Dry air with dew point of -40°C/Ar gas=40%/60% |
| Example 4 | Li₂Zr(SO₃)Cl₄ | Li | 2 | Zr | 1 | SO₃ | 1 | Cl | 4 | Li₂SO₃ | ZrCl₄ | 24 | Synthesized in Ar gas atmosphere |
| Example 5 | Li₂Zr(SO₃)Cl₄ | Li | 2 | Zr | 1 | SO₃ | 1 | Cl | 4 | Li₂SO₃ | ZrCl₄ | 24 | Dry air with dew point of -40°C/Ar gas=40%/60% |
| Example 6 | Li₂Zr(SO₄)_{0.3}(SO₃)_{0.7}Cl₄ | Li | 2 | Zr | 1 | SO₄/SO₃ | 0.3/0.7 | Cl | 4 | Li₂SO/Li₂SO₃ | ZrCl₄ | 24 | Synthesized in Ar gas atmosphere |
| Example 7 | Li₂Zr(SO₄)_{0.5}(SO₃)_{0.5}Cl₄ | Li | 2 | Zr | 1 | SO₄/SO₃ | 0.5/0.5 | Cl | 4 | Li₂SO₄/Li₂SO₃ | ZrCl₄ | 24 | Dry air with dew point of -40°C/Ar gas=20%/80% |
| Example 8 | Li₂Zr(SO₄)_{0.7}(SO₃)_{0.1}Cl₄ | Li | 2 | Zr | 1 | SO₄/SO₃ | 0.7/0.3 | Cl | 4 | Li₂SO₄/Li₂SO₃ | ZrCl₄ | 24 | Dry air with dew point of -40°C/Ar gas=40%/60% |
| Example 9 | Li₂Zr(S₂O₃)Cl₄ | Li | 2 | Zr | 1 | S₂O₃ | 1 | Cl | 4 | Li₂S₂O₃ | ZrCl₄ | 24 | Synthesized in Ar gas atmosphere |
| Example 10 | Li₂Zr(S₂O₃)Cl₄ | Li | 2 | Zr | 1 | S₂O₃ | 1 | Cl | 4 | Li₂S₂O₃ | ZrCl₄ | 24 | Dry air with dew point of -40°C/Ar gas=40%/60% |
| Example 11 | Li₂Zr(SO₄)_{0.3}(S₂O₃)_{0.7}Cl₄ | Li | 2 | Zr | 1 | SO₄/S₂O₃ | 0.3/0.7 | Cl | 4 | Li₂SO₄/Li₂S₂O₃ | ZrCl₄ | 24 | Synthesized in Ar gas atmosphere |
| Example 12 | Li₂Zr(SO₄)_{0.5}(S₂O₃)_{0.5}Cl₄ | Li | 2 | Zr | 1 | SO₄/S₂O₃ | 0.5/0.5 | Cl | 4 | Li₂SO₄/Li₂S₂O₃ | ZrCl₄ | 24 | Dry air with dew point of -40°C/Ar gas=20%/80% |
| Example 13 | Li₂Zr(SO₄)_{0.7}(S₂O₃)_{0.3}Cl₄ | Li | 2 | Zr | 1 | SO₄/S₂O₃ | 0.7/0.3 | Cl | 4 | Li₂SO₄/Li₂S₂O₃ | ZrCl₄ | 24 | Dry air with dew point of -40°C/Ar gas=40%/60% |
| Example 14 | Li₆PS₅Cl | | | | | | | | | Li₂S+P₂S₅+LiCl | | 24 | Synthesized in Ar gas atmosphere |
| Example 15 | Li_{9.54}Si_{1.74}P_{1.44}S_{11.7}Cl_{0.3} | | | | | | | | | Li₂S+SiS₂+P₂S₅+LiCl | | 24 | Synthesized in Ar gas atmosphere |
| Example 16 | Li₂Zr(SO₃)Cl₄ | Li | 2 | Zr | 1 | SO₃ | 1 | Cl | 4 | Li₂SO₃ | ZrCl₄ | 48 | Synthesized in Ar gas |
| | | | | | | | | | | | | | atmosphere |
| Example 17 | Li₂Zr(SO₃)Cl₄ | Li | 2 | Zr | 1 | SO₃ | 1 | Cl | 4 | Li₂SO₃ | ZrCl₄ | 72 | Synthesized in Ar gas atmosphere |
| Comparative Example 1 | Li₂ZrCl₆ | Li | 2 | Zr | 1 | | | Cl | 6 | LiCl | ZrCl₄ | 24 | Synthesized in Ar gas atmosphere |
| Comparative Example 2 | Li₃YCl₆ | Li | 3 | Y | 1 | | | Cl | 6 | LiCl | YCl₃ | 24 | Synthesized in Ar gas atmosphere |
| Comparative Example 3 | Li₃ZrPO₄Cl₄ | Li | 3 | Zr | 1 | PO₄ | 1 | Cl | 4 | Li₃PO₄ | ZrCl₄ | 24 | Synthesized in Ar gas atmosphere |
| Comparative Example 4 | Li₂Zr(SO₄)Cl₄ | Li | 2 | Zr | 1 | SO₄ | 1 | Cl | 4 | Li₂PO₄ | ZrCl₄ | 24 | Dry air with dew point of -40°C/Ar gas=60%/40% |
| Comparative Example 5 | Li₂Zr(SO₃)Cl₄ | Li | 2 | Zr | 1 | SO₃ | 1 | Cl | 4 | Li₂PO₃ | ZrCl₄ | 24 | Dry air with dew point of -40°C/Ar gas=60%/40% |
| Comparative Example 6 | Li₂Zr(S₂O₃)Cl₄ | Li | 2 | Zr | 1 | S₂O₃ | 1 | Cl | 4 | Li₂S₂O₃ | ZrCl₄ | 24 | Dry air with dew point of -40°C/Ar gas=60%/40% |

**[Table 2]**

| | Compound | Peak intensity (SO₃⁻) | Peak intensity (SO₄⁻) | TOF-SIMS peak intensity ratio | **Ion** conductivity |
|---|---|---|---|---|---|
| | | Ra | Rb | Ra/Rb | S/cm |
| Example 1 | Li₂Zr(SO₄)Cl₄ | 86940 | 54000 | 1.61 | 2.4E-03 |
| Example 2 | Li₂Zr(SO₄)Cl₄ | 72000 | 51000 | 1.41 | 2.0E-03 |
| Example 3 | Li₂Zr(SO₄)Cl₄ | 41600 | 22000 | 1.89 | 3.1E-04 |
| Example 4 | Li₂Zr(SO₃)Cl₄ | 110000 | 70968 | 1.55 | 3.1E-03 |
| Example 5 | Li₂Zr(SO₃)Cl₄ | 73000 | 39037 | 1.87 | 4.0E-04 |
| Example 6 | Li₂Zr(SO₄)_{0.3}(SO₃)_{0.7}Cl₄ | 84000 | 50909 | 1.65 | 1.8E-03 |
| Example 7 | Li₂r(SO₄)_{0.5}(SO₃)_{0.5}Cl₄ | 96000 | 68085 | 1.41 | 1.4E-03 |
| Example 8 | Li₂Zr(SO₄)_{0.7}(SO₃)_{0.3}Cl₄ | 105000 | 85366 | 1.23 | 9.4E-04 |
| Example 9 | Li₂Zr(S₂O₃)Cl₄ | 115200 | 72000 | 1.60 | 2.6E-03 |
| Example 10 | Li₂Zr(S₂O₃)Cl₄ | 80240 | 68000 | 1.18 | 3.4E-04 |
| Example 11 | Li₂Zr(SO₄)_{0.3}(S₂O₃)_{0.7}Cl₄ | 173680 | 104000 | 1.67 | 1.5E-03 |
| Example 12 | Li₂Zr(SO₄)_{0.5}(S₂O₃)_{0.5}Cl₄ | 157170 | 93000 | 1.69 | 1.1E-03 |
| Example 13 | Li₂Zr(SO₄)_{0.7}(S₂O₃)_{0.3}Cl₄ | 143500 | 82000 | 1.75 | 7.9E-04 |
| Example 14 | Li₆PS₅Cl | 64000 | 37870 | 1.69 | 1.0E-03 |
| Example 15 | Li_{9.54}Si_{1.74}P_{1.44}S_{11.7}Cl_{0.3} | 62000 | 39744 | 1.56 | 5.4E-03 |
| Example 16 | Li₂Zr(SO₃)Cl₄ | 38017 | 9198 | 4.13 | 3.0E-04 |
| Example 17 | Li₂Zr(SO₃)Cl₄ | 58200 | 10200 | 5.71 | 2.8E-04 |
| Comparative Example 1 | Li₂ZrCl₆ | | | 0.00 | 2.0E-03 |
| Comparative Example 2 | Li₃YCl₆ | | | 0.00 | 7.2E-04 |
| Comparative Example 3 | Li₃ZrPO₄Cl₄ | | | 0.00 | 1.8E-03 |
| Comparative Example 4 | Li₂Zr(SO₄)Cl₄ | 62000 | 67391 | 0.92 | 7.8E-05 |
| Comparative Example 5 | Li₂Zr(SO₃)Cl₄ | 61000 | 68539 | 0.89 | 1.0E-04 |
| Comparative Example 6 | Li₂Zr(S₂O₃)Cl₄ | 57000 | 64773 | 0.88 | 8.5E-05 |

**[Table 3]**

| | Positive electrode mixture material | | Rate property (1C/0.1C) |
|---|---|---|---|
| | Compound | Active material | % |
| Example 1 (positive electrode) | Li₂Zr(SO₄)Cl₄ | LiCoO₂ | 83 |
| Example 2 (positive electrode) | Li₂Zr(SO₄)Cl₄ | LiCoO₂ | 81 |
| Example 3 (positive electrode) | Li₂Zr(SO₄)Cl₄ | LiCoO₂ | 64 |
| Example 4 (positive electrode) | Li₂Zr(SO₃)Cl₄ | LiCoO₂ | 90 |
| Example 5 (positive electrode) | Li₂Zr(SO₃)Cl₄ | LiCoO₂ | 66 |
| Example 6 (positive electrode) | Li₂Zr(SO₄)_{0.3}(SO₃)_{0.7}Cl₄ | LiCoO₂ | 80 |
| Example 7 (positive electrode) | Li₂Zr(SO₄)_{0.5}(SO₃)_{0.5}Cl₄ | LiCoO₂ | 78 |
| Example 8 (positive electrode) | Li₂Zr(SO₄)_{0.7}(SO₃)_{0.3}Cl₄ | LiCoO₂ | 73 |
| Example 9 (positive electrode) | Li₂Zr(S₂O₃)Cl₄ | LiCoO₂ | 86 |
| Example 10 (positive electrode) | Li₂Zr(S₂O₃)Cl₄ | LiCoO₂ | 65 |
| Example 11 (positive electrode) | Li₂Zr(SO₄)_{0.3}(SO₃)_{0.7}Cl₄ | LiCoO₂ | 79 |
| Example 12 (positive electrode) | Li₂Zr(SO₄)_{0.5}(S₂O₃)_{0.5}Cl₄ | LiCoO₂ | 76 |
| Example 13 (positive electrode) | Li₂Zr(SO₄)_{0.7}(S₂O₃)_{0.3}Cl₄ | LiCoO₂ | 70 |
| Example 14 (positive electrode) | Li₆PS₅Cl | LiCoO₂ | 75 |
| Example 15 (positive electrode) | Li_{9.54}Si_{1.74}P_{1.44}S_{11.7}Cl_{0.3} | LiCoO₂ | 93 |
| Example 16 (positive electrode) | Li₂Zr(SO₃)Cl₄ | LiCoO₂ | 63 |
| Example 17 (positive electrode) | Li₂Zr(SO₃)Cl₄, | LiCoO₂ | 62 |
| Comparative Example 1 (positive electrode) | Li₂ZrCl₆ | LiCoO₂ | 59 |
| Comparative Example 2 (positive electrode) | Li₃YCl₆ | LiCoO₂ | 55 |
| Comparative Example 3 (positive electrode) | Li₃ZrPO₄Cl₄ | LiCoO₂ | 53 |
| Comparative Example 4 (positive electrode) | Li₂Zr(SO₄)Cl₄ | LiCoO₂ | 52 |
| Comparative Example 5 (positive electrode) | Li₂Zr(SO₃)Cl₄ | LiCoO₂ | 49 |
| Comparative Example 6 (positive electrode) | Li₂Zr(S₂O₃)Cl₄ | LiCoO₂ | 48 |

### (Production of negative electrode mixture)

In order to produce a negative electrode mixture, lithium titanate (Li₄Ti₅O₁₂) as a negative electrode active material and Li₂Zr(SO₄)Cl₄ of Negative Electrode Example 1 were prepared. The negative electrode active material and Li₂Zr(SO₄)Cl₄ of Negative Electrode Example 1 were weighed out to achieve 60 wt% and 40 wt%, respectively. The weighed negative electrode active material and Li₂Zr(SO₄)Cl₄ of Negative Electrode Example 1 were mixed in an agate mortar for 15 minutes to obtain a negative electrode mixture.

### (Production of half-cell for charging and discharging)

A half-cell for charging and discharging was produced in a glove box with a dew point of about -70°C.

A pellet producing jig was used to prepare a half-cell. The pellet producing jig included a polyetheretherketonet (PEEK) cylinder with an outer diameter of 30 mm, an inner diameter of 10 mm, and a height of 20 mm, and an upper punch and lower punch with a diameter of 9.99 mm. The material of the upper and lower punches was die steel (SKD11 material).

The lower punch was inserted into the PEEK cylinder, and 110 mg of the solid electrolyte Li₂Zr(SO₄)Cl₄ was placed on the lower punch. Next, the PEEK cylinder was vibrated to level the surface of the solid electrolyte, the upper punch was then inserted onto the solid electrolyte, and pressing was performed with a load of 373 MPa using a press machine to form a solid electrolyte layer.

Next, the upper punch was removed and 15 mg of the negative electrode mixture was poured onto the solid electrolyte layer. Next, the PEEK cylinder was vibrated to level the surface of the negative electrode mixture, the upper punch was then inserted onto the negative electrode mixture, and pressing was performed with a load of 373 MPa using a press machine. Next, the lower punch was removed, a lithium foil with a diameter of 10 mm and a thickness of 100 µm was placed on the solid electrolyte layer, and the lower punch was inserted. The half-cell had a configuration of (Li₄Ti₅O₁₂+Li₂Zr(SO₄)Cl₄)/Li₂Zr(SO₄)Cl₄/Li.

In addition, two stainless steel sheets with a diameter of 50 mm and a thickness of 5 mm and two Bakelite (registered trademark) sheets with a diameter of 50 mm and a thickness of 2 mm were prepared. Next, four holes through which screws would pass were made in each of the two stainless steel sheets and the two Bakelite (registered trademark) sheets. When the half-cell, two stainless steel sheets and two Bakelite (registered trademark) sheets were laminated, the holes through which screws would pass were made at positions at which the two stainless steel sheets and the two Bakelite (registered trademark) sheets overlapped in a plan view and did not overlap the half-cell in a plan view.

Then, the stainless steel sheet, the Bakelite (registered trademark) sheet, the half-cell, the Bakelite (registered trademark) sheet, and the stainless steel sheet were laminated in this order, and screws were inserted into the screw holes and tightened with a torque of 1 N·m. In this manner, a half-cell in which the upper punch and the lower punch of the electrochemical cell were insulated by the Bakelite (registered trademark) sheet was obtained. Next, the half-cell was left in a thermostatic chamber at 25°C for 48 hours to stabilize an open circuit voltage.

### <Measurement of rate property>

The produced half-cell was charged and discharged under the following conditions. The voltage range was 1.0 V to 2.5 V. Charging was performed at a constant current of 0.1C, and after the constant voltage, charging was completed when the current reached a value equivalent to 0.05C. Discharging was performed at 0.1C and 1.0C, and the ratio (rate property (unit:%)) of the discharge capacity at 1C to the discharge capacity at 0.1C, which was defined as 100%, was determined. The obtained results are shown in Table 1.

The measurement results of the rate property of the half-cells of the solid electrolytes of Negative Electrode Examples 1 to 17 are summarized in the following

Table 4.

### <Negative Electrode Comparative Examples>

The solid electrolytes (compounds) of Negative Electrode Comparative Examples 1 to 6 were the same as the solid electrolytes (compounds) of Positive Electrode Comparative Examples 1 to 6, respectively, and correspond to the compounds of Comparative Examples 1 to 6 shown in Table 1. In addition, the properties of Negative Electrode Comparative Examples 1 to 6 correspond to the properties of Comparative Examples 1 to 6 shown in Table 2.

In addition, half-cells of the solid electrolytes (compounds) of Negative Electrode Comparative Examples 1 to 6 were produced in the same manner as the half-cells of the solid electrolytes (compounds) of Negative Electrode Examples 1 to 17, and the rate property thereof was measured. The measurement results are summarized in the following Table 4.

**[Table 4]**

| | Negative electrode mixture material | | Rate property (1C/0.1C) |
|---|---|---|---|
| | Compound | Active material | % |
| Example 1 (negative electrode) | Li₂Zr(SO₄)Cl₄ | Li₄Ti₅O₁₂ | 81 |
| Example 2 (negative electrode) | Li₂Zr(SO₄)Cl₄ | Li₄Ti₅O₁₂ | 79 |
| Example 3 (negative electrode) | Li₂Zr(SO₄)Cl₄ | Li₄Ti₃O₁₂ | 62 |
| Example 4 (negative electrode) | Li₂Zr(SO₃)Cl₄ | Li₄Ti₃O₁₂ | 88 |
| Example 5 (negative electrode) | Li₂Zr(SO₃)Cl₄ | Li₄Ti₅O₁₂ | 64 |
| Example 6 (negative electrode) | Li₂Zr(SO₄)_{0.3}(SO₃)_{0.7}Cl₄ | Li₄Ti₅O₁₂ | 78 |
| Example 7 (negative electrode) | Li₂Zr(SO₄)_{0.5}(SO₃)_{0.5}Cl₄ | Li₄Ti₅O₁₂ | 76 |
| Example 8 (negative electrode) | Li₂Zr(SO₄)_{0.7}(SO₃)_{0.3}Cl₄ | Li₄Ti₅O₁₂ | 71 |
| Example 9 (negative electrode) | Li₂Zr(S₂O₃)Cl₄ | Li₄Ti₅O₁₂ | 84 |
| Example 10 (negative electrode) | Li₂Zr(S₂O₃)Cl₄ | Li₄Ti₅O₁₂ | 63 |
| Example 11 (negative electrode) | Li₂Zr(SO₄)_{0.3}(S₂O₃)_{0.7}Cl₄ | Li₄Ti₅O₁₂ | 77 |
| Example 12 (negative electrode) | Li₂Zr(SO₄)_{0.3}(S₂O₃)_{0.5}Cl₄ | Li₄Ti₅O₁₂ | 74 |
| Example 13 (negative electrode) | Li₂Zr(SO₄)_{0.7}(S₂O₃)_{0.3}Cl₄ | Graphite | 67 |
| Example 14 (negative electrode) | Li₆PS₅Cl | Li₄Ti₅O₁₂ | 73 |
| Example 15 (negative electrode) | Li_{9.54}Si_{1.74}P_{1.44}S_{11.7}Cl_{0.3} | Li₄Ti₅O₁₂ | 91 |
| Example 16 (negative electrode) | Li₂Zr(SO₃)Cl₄ | Li₄Ti₅O₁₂ | 61 |
| Example 17 (negative electrode) | Li₂Zr(SO₃)Cl₄ | Li₄Ti₃O₁₂ | 61 |
| Comparative Example 1 (negative electrode) | Li₂ZrCl₆ | Li₄Ti₅O₁₂ | 57 |
| Comparative Example 2 (negative electrode) | Li₃YCl₆ | Li₄Ti₅O₁₂ | 53 |
| Comparative Example 3 (negative electrode) | Li₃ZrPO₄Cl₄ | Li₄Ti₅O₁₂ | 51 |
| Comparative Example 4 (negative electrode) | Li₂Zr(SO₄)Cl₄ | Li₄Ti₅O₁₂ | 50 |
| Comparative Example 5 (negative electrode) | Li₂Zr(SO₃)Cl₄ | Li₄Ti₃O₁₂ | 47 |
| Comparative Example 6 (negative electrode) | Li₂Zr(S₂O₃)Cl₄ | Li₄Ti₅O₁₂ | 45 |

Comparing Examples 1 to 17 with Comparative Examples 4 to 6 in terms of the peak intensity ratio R1 (Ra/Rb) of the peak intensity Ra of SO₃⁻ to the peak intensity Rb of SO₄⁻, it can be understood that the ion conductivity of Examples 1 to 17 in which the peak intensity ratio R1 was larger than 1 was larger than the ion conductivity of Comparative Examples 4 to 6 in which the peak intensity ratio R1 was less than 1. Specifically, Example 17, with the smallest ion conductivity among Examples 1 to 17, had an ion conductivity of 2.8×10⁻⁴ [S/cm], but Comparative Example 5, with the highest ion conductivity among Comparative Examples 4 to 6, had an ion conductivity of 1.0×10⁻⁴ [S/cm]. Thus, the peak intensity ratio R1 (Ra/Rb) could be used as an index of ion conductivity.

In addition, in Examples 1 to 17, the peak intensity ratio R1 (Ra/Rb) satisfied 6.0>R1>1.0 and 5.71 (Example 17)≥R1≥1.18 (Example 10). In addition, in Examples 1 to 15, the ion conductivity was 3.1×10⁻⁴ [S/cm] or more (Example 3), and 5.4×10⁻³ [S/cm] or less (Example 15).

In addition, in Examples 1, 2, 4, 6, 7, 8, 9, and 11 to 15, the peak intensity ratio R1 (Ra/Rb) satisfied 1.8>R1>1.2. In addition, in Examples 1, 2, 4, 6, 7, 8, 9, and 11 to 15, the ion conductivity was 9.4×10⁻⁴ or more (Example 8), and 5.4×10⁻³ [S/cm] or less (Example 15).
When 1.8>R1>1.2, the ion conductivity was 9.4×10⁻⁴ [S/cm] or more. In this manner, the peak intensity ratio R1 (Ra/Rb) could be used as an index of ion conductivity.

In addition, in Examples 1, 2, 4, 6, 7, 9, 11, 12, 14, and 15, the peak intensity ratio R1 (Ra/Rb) satisfied 1.7>R1>1.4.

In addition, in Examples 1 to 3, the compounds had the same composition, but their ion conductivities were different. This is due to the different atmospheres (synthesis atmospheres) in which synthesis was performed. Thus, the ion conductivity could be adjusted by adjusting the synthesis atmosphere.

Similarly, in Examples 4 and 5, the compounds had the same composition, but their ion conductivities were different due to different synthesis atmospheres.

Similarly, in Examples 9 and 10, the compounds had the same composition, but their ion conductivities were different due to different synthesis atmospheres.

In Examples 6 to 8, the compounds had the same constituent elements, but their ion conductivities were different due to the different ratio of SO₄ and SO₃. This is due to the different proportions of raw materials synthesized and different synthesis atmospheres. Thus, by adjusting the synthesis atmosphere, the ratio of SO₄ and SO₃ could be adjusted, and the ion conductivity could be adjusted.

Similarly, in Examples 11 to 13, the compounds had the same constituent elements, but their ratios of SO₄ and SO₃ were different and their ion conductivities were also different. This is due to the different synthesis atmospheres. Thus, by adjusting the synthesis atmosphere, the ratio of SO₄ and SO₃ could be adjusted, and the ion conductivity could be adjusted.

In Examples 4, 16, and 17, the compounds had the same composition, but their ion conductivities were different. This is due to the different synthesis times. Thus, the ion conductivity could be adjusted by adjusting the synthesis time.

In Examples 4, 16, and 17, the synthesis times were 24 hours, 48 hours, and 72 hours, respectively, and the ion conductivities were 3.1×10⁻³ [S/cm], 3.0×10⁻⁴ [S/cm], and 2.8×10⁻⁴ [S/cm], respectively. Example 4, with a synthesis time of 24 hours, had the highest ion conductivity. The ion conductivity of Example 4 was one order of magnitude larger than the ion conductivity of Examples 16 and 17. Thus, by adjusting the synthesis time, an improvement in ion conductivity of one order of magnitude or more could be achieved even for compounds having the same composition.

Comparing compounds having the same composition, among three synthesis atmospheres: Ar gas atmosphere, a mixed atmosphere of dry air with a dew point of about -40°C and argon gas at a volume ratio of 20%:80%, and a mixed atmosphere of dry air with a dew point of about -40°C and argon gas at a volume ratio of 40%:60%, the ion conductivity was the highest in the case of the Ar gas atmosphere.

### REFERENCE SIGNS LIST

10 Solid electrolyte layer
20 Positive electrode
22 Positive electrode current collector
24 Positive electrode mixture layer
30 Negative electrode
32 Negative electrode current collector
34 Negative electrode mixture layer
40 Power generation element
50 Exterior body
52 Metal foil
54 Resin layer
60, 62 Terminal
100 All-solid-state battery

## Claims

1. An electrode comprising a compound which contains Li, at least one element selected from among Group 3 to Group 15 elements, and S,
wherein a peak intensity Ra of SO₃⁻ and a peak intensity Rb of SO₄⁻ obtained by negative ion analysis through time-of-flight secondary ion mass spectrometry satisfy Ra>Rb.

2. The electrode according to claim 1, wherein a peak intensity ratio R1 (Ra/Rb) of the peak intensity Ra of SO₃⁻ to the peak intensity Rb of SO₄⁻ in the compound satisfies 6.0>R1>1.0.

3. The electrode according to claim 1, wherein a peak intensity ratio R1 (Ra/Rb) of the peak intensity Ra of SO₃⁻ to the peak intensity Rb of SO₄⁻ in the compound satisfies 1.8>R1>1.2.

4. The electrode according to claim 1, wherein a peak intensity ratio R1 (Ra/Rb) of the peak intensity Ra of SO₃⁻ to the peak intensity Rb of SO₄⁻ in the compound satisfies 1.7>R1>1.4.

5. The electrode according to claim 1, wherein, in negative ion analysis of the compound through time-of-flight secondary ion mass spectrometry, an SO⁻ peak, an SO₂⁻ peak, an SO₃⁻ peak, and an SO₄⁻ peak are detected, and among the four peaks, the SO₃⁻ peak has a strongest peak intensity.

6. The electrode according to claim 1, wherein the compound is represented by the following Formula (1):
LiaEbGeXd··· (1)
(in Formula (1), E is at least one element selected from the group consisting of Al, Sc, Y, Zr, Hf, and lanthanoids, G is at least one group selected from the group consisting of SO₃, SO₄, SO₅, S₂O₃, S₂O₄, S₂O₅, S₂O₆, S₂O₇, and S₂O₈, X is at least one element selected from the group consisting of F, Cl, Br, and I, and 0.5≤a<6, 0<b<2, 0.1<c≤6, 0<d≤6.1).

7. An all-solid-state battery comprising:
a positive electrode and a negative electrode which face each other with a solid electrolyte layer therebetween,
wherein at least one of the positive electrode and the negative electrode includes the electrode according to any one of claims 1 to 6.

8. The all-solid-state battery according to claim 7, wherein the solid electrolyte layer contains a compound represented by the following Formula (2):
LiaEbGcXd··· (2)
(in Formula (2), E is at least one element selected from the group consisting of Al, Sc, Y, Zr, Hf, and lanthanoids, G is at least one group selected from the group consisting of SO₃, SO₄, SO₅, S₂O₃, S₂O₄, S₂O₅, S₂O₆, S₂O₇, and S₂O₈, X is at least one element selected from the group consisting of F, Cl, Br, and I, and 0.5<a<6, 0<b<2, 0.1<c≤6, 0<d≤6.1).
